# EUROPEAN PATENT APPLICATION

(11) **EP 3 875 933 A1**
(43) Date of publication of application: **08.09.2021**
(21) Application number: 20161546.5
(22) Date of filing: 06.03.2020
(51) Int. Cl.: G01L 3/10, G01L 5/22

(54) **TORQUE SENSOR UNIT AND TORQUE AND ANGLE SENSOR COMPRISING THE SAME**

(71) Applicant: Bourns, Inc., Riverside, CA 92507 (US)
(72) Inventor: KUPÓ, Balázs, 8200 Veszprém (HU); DOBOS, Gergö, 8414 Olaszfalu (HU); Ambrusz, Gábor, 8248 Nemesvámos (HU)
(74) Representative: Danubia Patent & Law Office LLC

(57) **Abstract**

The present invention relates to a torque sensor unit (100) especially for a torque and angle sensor. Said torque sensor unit (100) having a central axis (C) defining an axial direction, and comprising: two stator parts (2) that are spaced apart along the central axis, each stator part comprising a plurality of teeth (21) and at least one edge element (22) concentrically arranged with respect to said central axis; two flux conductors (3), each having a plate-shaped flux receiving part (31) extending in a direction forming an angle of at least 45° with the central axis (C) for receiving the magnetic flux from the respective stator part (2) and each being disposed in alignment with the at least one edge element (22) of the respective stator part (2), wherein the flux receiving parts (31) have a flux receiving region (33) being a region of the flux receiving parts (31) that is in the closest proximity of the edge element (22); at least one magnetic sensor (4); at least one permanent magnet (1); wherein the stator parts (2) are configured to conduct magnetic flux from said at least one permanent magnet (1) to the flux conductors (3) and the flux conductors (3) are configured to conduct magnetic flux to said at least one magnetic sensor (4), wherein said at least one edge element (22) of the stator parts (2) extends in the axial direction; at least a portion of the flux receiving part (31) of a flux conductor (3) extends over said at least one edge element (22) of the respective stator part (2) with a gap therebetween, and wherein the area of the flux receiving part (31) of the flux conductor (3) is defined between an inner radius and an outer radius measured from the central axis (C) in radial direction, wherein the inner radius is smaller than the distance of the edge element (22) from said central axis (C) and the outer radius is greater than the distance of the edge element (22) from the central axis (C). The present invention also relates to torque and angle sensor, comprising a housing (200); said torque sensor unit (100); and an angle sensor unit, comprising a first gear (8a) fixed to the torque sensor unit, at least one second gear (8b), at least one sensor for sensing the rotation of the at least one second gear (8b), wherein the first gear (8a) and the at least one second gear (8b) has corresponding teeth in operational engagement with each other.

## Description

The present invention relates to a torque sensor unit, especially for a torque and angle sensor (TAS), and a TAS comprising said torque sensor unit.

Torque and angle sensors are used e.g. for controlling power-assisted steering of motor vehicles, wherein the TAS simultaneously measures the position of a steering column and the torque applied thereto. The steering column in this setup comprises a first part fixed to the steering wheel and a second part connected to the wheels to be steered, usually via a rack and pinion mechanism and further connecting members. The first and second part of the steering column is connected to each other via a torsion bar, which allows a relative rotation of a few degrees (e.g. 2° to 4°) between the first part and the second part. This relative rotation is measured by the torque sensor unit and the torque applied to the torsion bar is calculated therefrom. At the same time, the current position of the steering wheel and thus of the steering column is monitored by an angle sensor in a range of several hundred degrees, usually more than one total revolution in both directions, i.e. a total range of more than 720°. The torque sensor unit and the angle sensor unit are usually incorporated into a single TAS arranged around the steering column at the torsion bar.

The TAS is required to be accurate and reliable over the lifetime of the vehicle, while a persistent need of the industry is the reduction of the size and manufacturing cost of the TAS.

One of the factors affecting the accuracy of the torque sensors is the radial play of the housing of the sensor around the steering column. Constraining said radial play by the bearing mechanisms holding the housing is generally more difficult than constraining the relative axial movement thereof.

US Patent No. 8,286,507 describes a torque sensor arrangement to be used in the aforementioned configuration. The torque sensor arrangement comprises a magnet fixed to the first steering column part and two crown shaped stator parts fixed to the second steering column part. Said ferromagnetic stators have axially extending teeth for picking up magnetic flux of a ring shaped magnet located concentrically inside said stators and fixed to the first steering column part. The stators have axially extending annular flux transferring regions, which are surrounded by axially extending ferromagnetic collector plates, which then conduct the flux to magnetic sensors. The relative rotation of the first and second steering column parts causes a relative rotation of the magnet and the stators. This causes a change in the magnetic flux received and transferred by the stators. The amount of change is proportional to the amount of relative rotation and thus to the torque applied on the torsion bar. The relatively large neighboring areas of the stators and the collectors provide good flux transfer therebetween, but the radial play of the stators relative to the collectors would change the width of the gap between a stator and a collector and ultimately result in significant measurement errors unless the stator-collector play is controlled by corresponding machined metal parts, e.g. metal bearings, which add significant manufacturing costs to the arrangement.

US Patent No. 9,821,846 describes a TAS comprising a torque sensor unit and an angle sensor unit. The torque sensor unit having two stator parts with axially extending teeth arranged around a ring shaped magnet, wherein the first and the second stator part is to be fixed to one of the steering column parts and the magnet is to be fixed to the other one of the steering column parts. The stators have radially extending edge elements for transferring flux to radially extending collectors arranged above or below the respective edge elements. The collectors conduct the flux to magnetic sensors. Relative rotation of the two steering column parts is thus measured by the magnetic sensors and the torque is calculated accordingly. The width of the gap between radially extending edge elements of the stators and the radially extending collectors is not affected by the radial play of the steering column, however, the overlapping area of the edge element of the stator and the corresponding collector is affected, and this ultimately causes significant measurement errors. The radially extending edge elements also increase the radial dimensions of the torque sensor unit and thus of the whole TAS.

An object of the present invention is to reduce or eliminate the drawbacks of the prior art solutions by providing a torque sensor unit with improved tolerance for radial play of the collectors relative to the stators.

A further object of the invention is to provide a torque sensor unit for a TAS having a smaller size relative to the prior art solutions.

A further object of the invention is to provide a torque sensor unit for a TAS having lower manufacturing cost with respect to the prior art solutions.

A yet further object of the invention is to provide a TAS with improved tolerance for radial play and/or reduced size and/or reduced cost.

Accordingly, the above objects are achieved by providing a torque sensor unit having a central axis defining an axial direction, the torque sensor unit comprising: two stator parts that are spaced apart along the central axis, each stator part comprising a plurality of teeth and at least one edge element concentrically arranged with respect to said central axis; two flux conductors, each having a plate-shaped flux receiving part extending in a direction forming an angle of at least 45° with the central axis for receiving the magnetic flux from the respective stator part and each being disposed in alignment with the at least one edge element of the respective stator part, wherein the flux receiving parts have a flux receiving region being a region of the flux receiving parts that is in the closest proximity of the edge element; at least one magnetic sensor; at least one permanent magnet; wherein the stator parts are configured to conduct magnetic flux from said at least one permanent magnet to the flux conductors and the flux conductors are configured to conduct magnetic flux to said at least one magnetic sensor; wherein said at least one edge element of the stator parts extends in the axial direction; at least a portion of the flux receiving part of a flux conductor extends over said at least one edge element of the respective stator part with a gap therebetween, and wherein the area of the flux receiving part of the flux conductor is defined between an inner radius and an outer radius measured from the central axis in radial direction, wherein the inner radius is smaller than the distance of the edge element from said central axis and the outer radius is greater than the distance of the edge element from the central axis.

Furthermore, the above objects are achieved by providing a torque and angle sensor, comprising a housing; a torque sensor unit; and an angle sensor unit, comprising a first gear fixed to the torque sensor unit, at least one second gear, at least one sensor for sensing the rotation of the at least one second gear, wherein the first gear and the at least one second gear has corresponding teeth in operational engagement with each other, wherein the torque sensor unit is a torque sensor unit according to the invention as described above.

Preferred exemplary embodiments of the torque sensor unit and the TAS are set out in the dependent claims.

In what follows, the invention, especially preferred exemplary embodiments thereof are described in detail with reference to the accompanying drawings, wherein
- Figures 1A-1E show preferred exemplary embodiments of the torque sensor unit according to the invention in perspective view;
- Figure 2A-2C show preferred exemplary embodiments of the stators of the torque sensor unit according to the invention;
- Figure 3 is a sectional view of the arrangement shown in Figure 1A;
- Figure 4 shows a preferred exemplary embodiment of the stators and their holding members for a TAS according to the invention in exploded perspective view;
- Figure 5 shows a preferred exemplary embodiment of the TAS according to the invention in exploded perspective view;
- Figure 6 is a sectional view of a preferred exemplary embodiment of the TAS according to the invention.

In the drawings like reference numbers denote like elements.

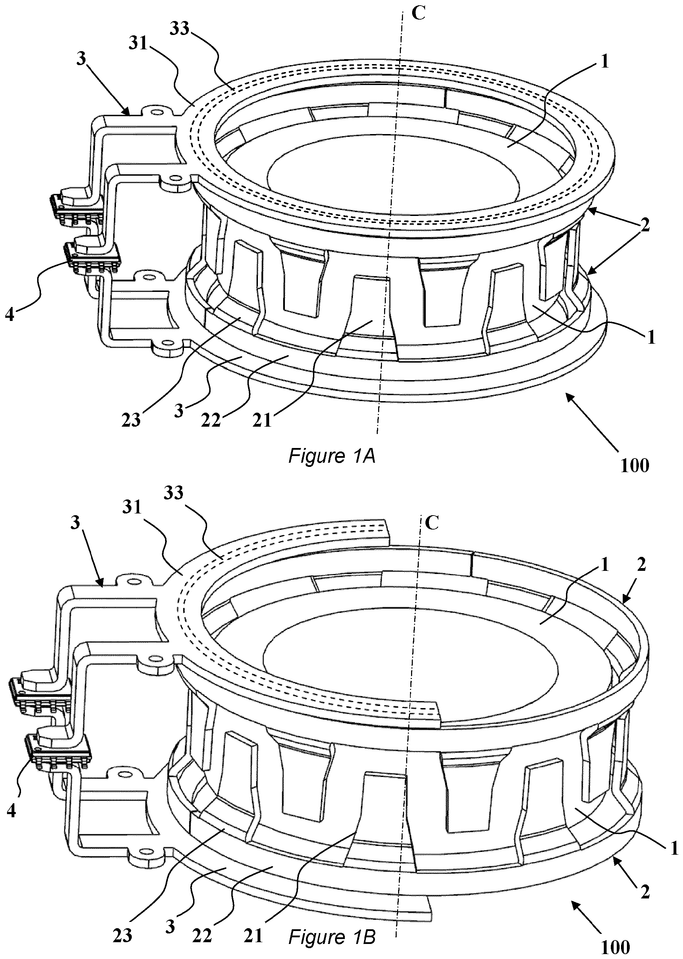

Figures 1A-1C show various preferred exemplary embodiments of the torque sensor unit 100 according to the invention in perspective view. The torque sensor unit 100 has a central axis C defining an axial direction and comprises at least one permanent magnet 1, two stator parts 2, two flux conductors 3 and at least one magnetic sensor 4. The at least one permanent magnet 1 is preferably formed as a single ring with at least one magnetic axis inclined relative to the central axis C, wherein the inclination angle is preferably 90 degrees, i.e. each magnetic axis is preferably radial relative to the central axis C. Each stator part 2 comprises axially extending teeth 21 for receiving magnetic flux from the at least one permanent magnet 1, and at least one edge element 22 for transferring said flux to the flux conductors 3. The teeth 21 and the at least one edge element 22 of each stator part 2 are made of a magnetizable material, preferably a ferromagnetic material, more preferably a ferromagnetic material with low hysteresis, i.e. a soft magnetic material, e.g. pure iron or a iron-nickel alloy with a nickel content of up to 80%, or iron-silicon alloy.

In use, some unintended radial movement, i.e. radial play or wobbling of the flux conductors 3 relative to the stator part 2 is expected due to mechanical limitations of supporting structures, thus the torque sensor unit 100 should be designed so that a given extent of said radial play does not significantly affect the measurement accuracy. Thus a design parameter is defined according to said extent of the radial play, which is here and from now on referred to as "radial tolerance" and is half of the expected total radial play, thus the radial tolerance is the distance by which the stator part 2 may move relative to the flux conductors 3 from a centered position in any radial direction. In a typical application, when the TAS is used for the power assisted steering of a car, its structural components are usually made of plastics due to cost considerations and rotation of a stator part 2 relative to a flux conductor is allowed by a slide bearing mechanism formed by said plastic structural elements. The radial play is thus greater than could be achieved by high-precision metallic bearings, its value is usually between 0.2 mm and 2 mm, e.g. 0.66 mm, thus the radial tolerance is preferably between 0.1 mm and 1 mm, e.g. 0.33 mm. For simplicity, the reference frame in the present description is chosen to be fixed relative to the flux conductors 3 and thus in this reference frame the stator part 2 is seen to be moving relative to the flux conductors 3 by the amount of said radial play, but it is noted that in practice, usually radial positions of the stator parts 2 are more stable and the radial movement of the flux conductors 3 causes said radial play.

The stator parts 2 are preferably arranged around said at least one permanent magnet 1. The number of the teeth 21 on each stator part 2 is preferably equal to the number of pairs of magnetic poles of the at least one permanent magnet 1, e.g. eight teeth 21 per stator part 2 for eight pairs of magnetic poles of the at least one permanent magnet 1. The magnetic poles and the teeth 21 are preferably equidistantly spaced along the circumference and in an initial position the teeth 21 are preferably arranged so that each tooth 21 is about halfway between a north magnetic pole and a south magnetic pole. Thus, due to the superposition of the magnetic fields, the total magnetic flux transferred from the at least one permanent magnet 1 to both of the stator parts 2 and transferred through the flux conductors 3 to the at least one magnetic sensor 4 is zero in the initial position. When one or both of the stator parts 2 is moved (i.e. rotated by a few degrees) relative to the permanent magnet 1, the flux transferred through said stator part(s) 2 changes with different signs and thus the flux measured by the magnetic sensor 4 changes accordingly. The preferred exemplary embodiments of the stator parts 2 shown in the Figures are provided with eight teeth 21, which allows good sensitivity, but the invention is not limited to this case. The skilled person may choose to use more or less teeth 21 according to the sensitivity to be achieved, size constraints, manufacturing options or other design considerations without the exertion of inventiveness. The at least one permanent magnet 1 is preferably formed as a single magnetic ring or may be formed by a suitable arrangement of flat plate shaped magnets arranged in a circle.

The flux conductors 3 are configured to conduct the magnetic flux from the stator parts 2 to the magnetic sensors. For this purpose, each flux conductor 3 is made of a magnetizable material, preferably a ferromagnetic material, more preferably a soft magnetic material, and has at least one plate-shaped flux receiving part 31, which extends radially in this exemplary embodiment, i.e. in a plane perpendicular to the central axis C for receiving the magnetic flux from the respective stator part 2. Here and from now on the terms "extending radially" and "radially extending" means that an element has a greater thickness or width in the radial direction than its axial size, while the terms "extending axially" and "axially extending" means that an element has a greater axial size than thickness or width in the radial direction. The flux receiving part 31 has a flux receiving region 33 closest to the edge element 22 that receives the greatest flux density from the edge element 22. The flux receiving region 33 may be defined as the geometric axial projection of the edge element 22 onto the surface of the flux receiving part 31. Naturally, the flux transfer is not restricted to this region, just most of the flux is transferred within and in the direct proximity of this region. The flux conductors 3 are disposed in alignment with the at least one edge element 22 of the respective stator part 2 so that the area of the flux receiving region 33 changes as little as possible when the stator part is moved slightly in the radial direction, i.e. the area of the flux receiving region 33 is invariant or quasi-invariant to the radial movement of the stator part 2 within a tolerance region. Due to the flux receiving part extending radially, the distance between the edge element 22 and the flux receiving part 31 does not change due to radial play. In the present description quasi-invariant means a change of less than 1%. This minimizes the measurement errors caused by the radial play of the stator parts 2 relative to the flux conductors 3.

The preferred exemplary embodiment shown in Figure 1A achieves said area invariance by the combination of the following features. The at least one edge element 22 is formed as a single ring extending in axial direction, the flux receiving part 31 is formed as a ring extending in radial direction with a width that is larger than the sum of thickness of the edge element 2 and twice the radial tolerance. The flux receiving region 33 is thus an annular region that stays completely within the flux receiving part 31, even when the stator part 2 wobbles in the radial direction by the radial tolerance, and thus the area of the flux receiving region 33 is invariant to the radial movement of the stator part 2 to the extent of the radial tolerance.

A more geometric description of the same configuration may be given as follows. The edge element 22 is circular (has a thin annular cross-section) and has an axial end surface in a plane perpendicular to the central axis C, said plane being parallel with the annular flux receiving part 31. The edge element 22 is arranged coaxially with the flux receiving part 31. The flux receiving part 31 has an inner radius that is smaller than a radius of the edge element 22 minus the radial tolerance and the flux receiving part 31 has an outer radius that is larger than the radius of the edge element 22 plus the radial tolerance. Thus in an operative state of the torque sensor unit 100 the geometric axial projection of the edge element 22 is between an inner circumference of the flux receiving part 31 and an outer circumference of the flux receiving part 31.

A further preferred exemplary embodiment shown in Figure 1B differs from the embodiment of Figure 1A in that the flux receiving part 31 is only a half of a radially extending ring and thus the flux receiving region 33 is a semi-annulus. For a radial movement that is 1% of the diameter of the edge element 22, the area of flux receiving region 33 changes by about 1%. This configuration can be used with larger or smaller sectors, i.e. the flux receiving part 31 and accordingly the flux receiving region 33 may be for example three quarters or one quarter or any other suitable portion of an annulus that is still sufficiently large to receive a significant amount of flux from the edge element 22. Most suitable sizes of said annulus portions are generally integer multiples of 1/(2n), wherein n is the number of teeth 21 on a single stator part 2, e.g. integer multiples of 1/16 if the number of teeth 21 on a stator par 2 is eight.

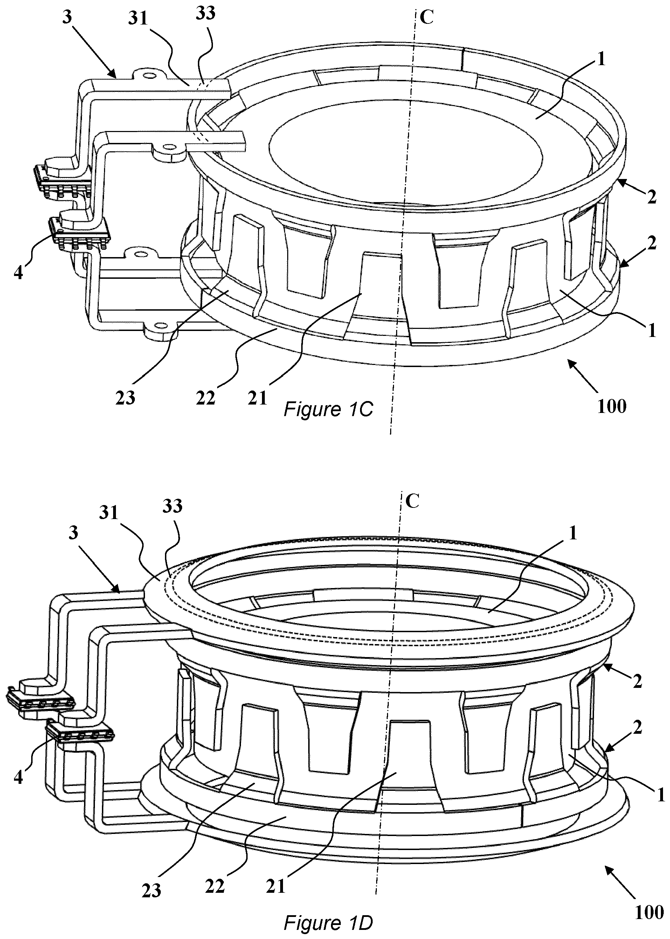

Figure 1C shows a further preferred exemplary embodiment, wherein two separate pairs of flux conductors 3 are used for the two magnetic sensors 4 and the flux receiving part 31 of each flux conductor 3 is rectangular. Accordingly, the flux receiving regions 33 are relatively small annulus-sections, having far less than 1% of variation in area for a radial movement of 1% of the diameter of the stator parts 2. In this embodiment, the inner and outer boundaries of the flux receiving part 31 are not circular, but the inventive idea of keeping the area of the flux receiving regions 33 invariant to the radial play of the stator part 2 persists nonetheless. In this case the inventive arrangement may be defined by the edge element 22 and the flux receiving part 31 extending in planes parallel with each other (and perpendicular to the central axis C) and by that the flux receiving part 31 extends from an inner radial position at a radius smaller than a radius of the edge element 22 to an outer radial position at a radius that is larger than the radius of the edge element 22. The flux receiving part 31 includes a predetermined tolerance region in both directions, wherein said tolerance region being at least as wide as the radial tolerance, preferably several times wider.

In a particularly preferred exemplary embodiment, when the torque sensor unit is to be used in a TAS for the power assisted steering of a land vehicle, e.g. a car, the typical diameter for the stator parts is in the range of 30 to 40 mm and the radial tolerance is e.g. about 0.33 mm, the thickness of the edge element is e.g. about 0.7 mm and the width of the flux receiving part 31 is preferably e.g. 3.8 mm.

The exemplary embodiments shown in Figures 1A-1C comprise two magnetic sensors 4, which provide reliable and accurate flux measurement, however it is possible and obvious to a person skilled in the art, that more or less magnetic sensors may be used resulting in corresponding changes in the measurement accuracy, space requirement and production cost. In the Figures 1A-1C the flux receiving region 33 is indicated by dashed lines and is to be understood as being on the surface of the flux receiving part 31 that faces the edge element 22, i.e. the bottom surface according to the orientation of the Figures.

The inventive idea of having a flux receiving region 33 that is invariant to the radial movement of the stator part 2 while the distance of the flux receiving part 31 and the edge element 22 is constant, is provided in each of the exemplary embodiments shown in Figures 1A-1C by the combination of the following common features. The flux receiving part 31 has an area defined between an inner radius and an outer radius, i.e. the flux receiving part 31 extends between said inner radius and said outer radius. Said inner radius is smaller than the distance of the edge element 22 from said central axis C at least by the amount of the radial tolerance, while the outer radius is greater than the distance of the edge element 22 from said central axis C at least by the amount of the radial tolerance. The flux receiving part 31 and the surface of the edge element 22 closest to the flux receiving part 31 extend in planes that are parallel with each other, i.e. there is a gap therebetween, said gap having a constant width, e.g. about 0.7 mm. The shape of the flux receiving part 31 is so that the perpendicular geometric projection of said surface of the edge element 22 onto said flux receiving part 31 is invariant or quasi-invariant to the radial movement of the edge element 22 by a radial tolerance.

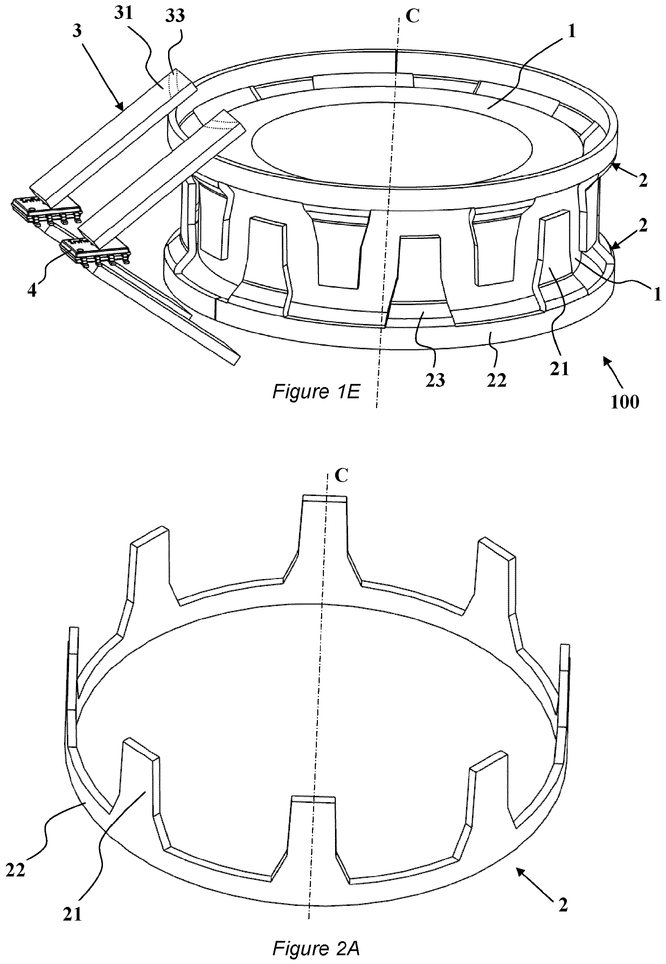

Figures 1D and 1E show further preferred embodiments of the torque sensor unit 100 according to the invention in perspective view. These embodiments are further variants of the embodiments shown in Figures 1A and 1C respectively, with the difference that the flux receiving part 31 of the flux conductors 3 are extending in a direction forming an acute angle with the central axis C. In the case of an annular flux receiving part 31 shown in Figure 1D this means that the flux receiving part 31 extends along a conical surface with a half cone angle that is said acute angle. In the case of a more simple, rectangular flux receiving part 31 as shown in Figure IE, this means that the inclination angle of said rectangular flux receiving part 31 relative to the central axis C is said acute angle. The embodiment shown in Figure IE has the further advantage that the whole flux conductor 3 may be formed as a simple straight rectangular piece, without bends, and thus is easier and cheaper to produce.

The inclination of the flux receiving parts 31 in the embodiments of Figure 1D and 1E slightly reduce the measurement error caused by relative axial play of the flux conductors and stators, while slightly increases the measurement error caused by the relative radial play in comparison to embodiments shown if Figures 1A and 1C. As the play can be constrained more effectively in the axial direction than in the radial direction, said acute angle is preferably at least 45°. The area of the actual flux receiving regions 33 in the embodiments of Figures 1D and 1E are invariant or quasi-invariant to radial play just the same way as they are in the embodiments of Figures 1A-1C. However, due to the inclination of the flux receiving parts 31, the distance between an edge element 22 and a corresponding flux receiving part 31 is not invariant to the radial play, thus the amount of the flux transferred between an edge element 22 and a corresponding flux receiving part 31 changes considerably due to the radial play, but these considerable changes may be mostly negated by arrangements allowing only approximately equal change of flux transfer at the top and the bottom flux receiving part 31 e.g. by the preferred arrangements shown in Figures 1D and IE. Namely, the top and bottom flux receiving parts 31 are preferably inclined by the same angle and in the case of non-annular flux receiving parts 31 they are also preferably arranged mirror-symmetrically to a plane perpendicular to the central axis, i.e. both being inclined toward each other or away from each other. In the case of annular flux receiving parts 31, said mirror-symmetry is not necessary for said negation, i.e. both flux receiving parts 31 may be inclined downward or both may inclined upward, not only away and toward each other. The terms top, bottom, upward and downward throughout the present specification are to be understood as directions and positions on the drawings where the central axis is close to vertical, not as actual positions and directions in a torque sensor unit 100 which may be arranged in any orientation as required by its actual application.

Figures 2A-2C show exemplary embodiments of the stator part 2 suitable for use in a torque sensor unit 100 according to the invention in perspective view.

Figure 2A shows a simple embodiment of the stator part 2, wherein the edge element 22 of the stator part 2 is an axially extending ring that links together all of the teeth 21 and the teeth 21 of the stator part 2 are arranged at the same radial distance from the central axis C as the edge element 22. This embodiment has the advantage of being easy to produce at a comparatively low cost.

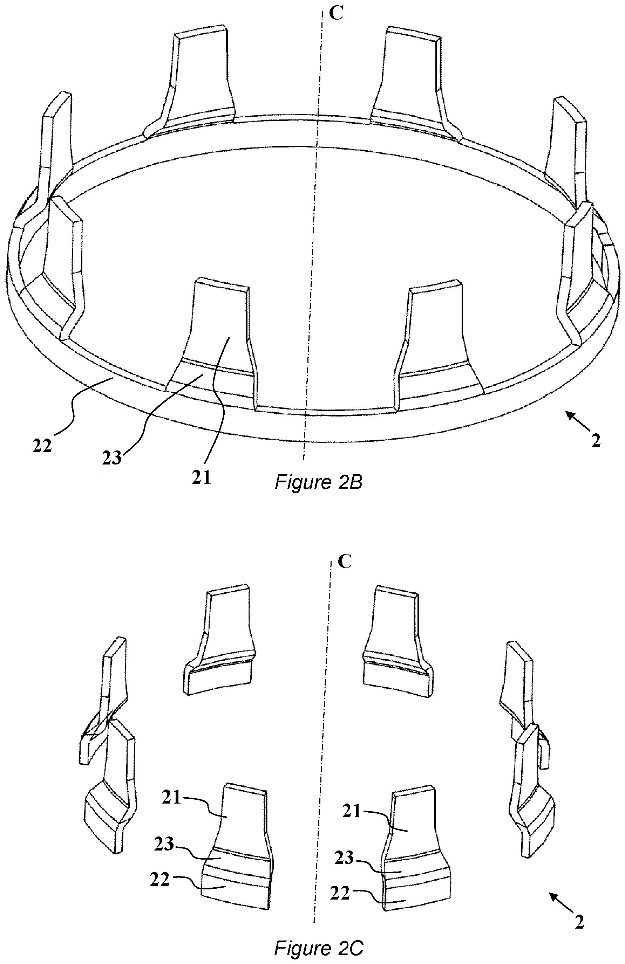

Figure 2B shows a preferred embodiment of the stator part 2, wherein the edge element 22 of the stator part 2 is an axially extending ring and the teeth 21 of the stator part 2 are connected to the edge element 22 via connecting portions 23 that are inclined relative to the central axis such that the teeth 21 are arranged at a smaller radial distance from the central axis C than the edge element 22. This embodiment has the advantage that the teeth 21 can be arranged closer to the permanent magnet 1 thus providing better flux transfer from the permanent magnet 1 to the teeth 21, than with the embodiment of Figure 2A, while still allowing the flux receiving part 31 to extend to an inner radius that is smaller than the radius of the edge element 22. When installing a torque sensing unit 100 or a TAS comprising thereof, usually the permanent magnet 1 is the last component to be inserted into the rest of assembly. Thus each of the flux receiving part 31, the teeth 21 and the edge element 22 puts a constraint for the maximum size of the permanent magnet 1 to be inserted because each of these components would mechanically block the insertion of the permanent magnet 1 if it was too large.

Figure 2C shows a further preferred embodiment of the stator part 2, wherein the edge element 22 of the stator part 2 comprises a plurality of edge members, each edge member being associated with a respective tooth 21 of the stator part 2. This segmented stator part 2 has the same advantages as the stator part 2 shown in Figure 2B, however the segmented version provides slightly lower sensitivity. Furthermore, the segmented stator part 2 has the advantage over those of Figure 2A and 2B that the separate teeth 21 with their corresponding connecting portions 23 and edge members may be independently placed into and fixed in a holder such that the repeated deformation of the holder due to vibration and thermal expansion does not result in the separation of the stator part 2 from the holder or its breaking, i.e. a more durable stator may be formed by such stator parts 2. The stator part 2 shown in Figure 2C is preferably used in a configuration shown in Figure 1A, i.e. with flux receiving parts 31 of a full annulus shape.

A further advantage of the stator parts 2 shown in Figures 2A-2C is that while providing a good rotational magnetic sensitivity and an improved radial magnetic sensitivity drift, their production costs is significantly lower than that of more sophisticated stators with radially extending portions, because the former may be produced simply from a single strip of material by punching it to shape and bending with generating less waste.

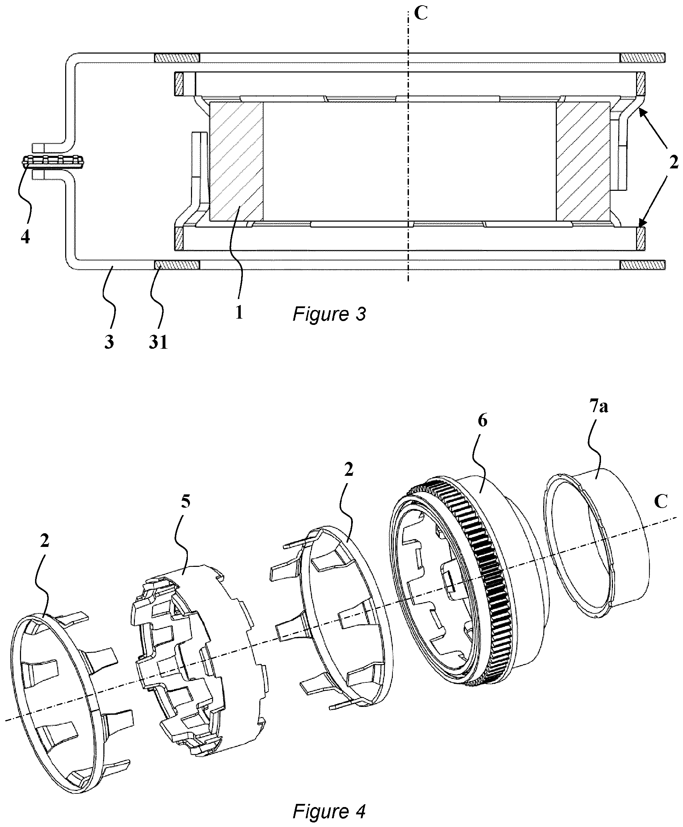

Figure 3 is a sectional view of the embodiment shown in Figure 1A.

Figure 4 shows further exemplary components associated with the stator parts 2 when the torque sensor unit 100 of the invention is to be used in a torque and angle sensor, namely a stator holder 5, a stator overmold 6 and a stator mounting ring 7a. Each of these components may be formed from one or more pieces. The stator holder 5 and the stator overmold 6 are preferably made of a polymer or other non-ferromagnetic materials. The stator holder 5 and the stator overmold 6 hold the two stator parts 2 in a fixed manner, forming a stator assembly, while the function of the stator mounting ring 7a is to secure the stator assembly to a first one of the parts susceptible to torque, e.g. to a first steering column part in a fixed manner. The stator overmold preferably comprises a first gear 8a, which is preferably formed on an outer circumference thereof and is suitable of engaging further measuring gears of an angle sensor unit. In the exemplary embodiment shown in the Figures, the stator holder 5 and the stator overmold 6 are two separate parts, but they can be formed as a single integral piece.

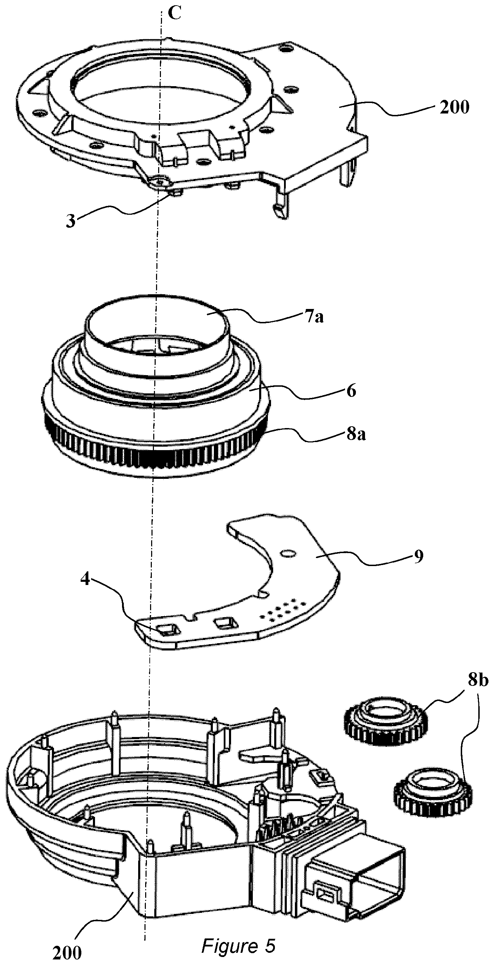

Figure 5 shows a preferred exemplary embodiment of the TAS according to the invention in exploded perspective view, without the permanent magnet and its mounting. The TAS comprises a housing 200, preferably formed of two parts, each of which is holding a corresponding flux conductor 3 of the torque sensor unit 100 according to the invention. The stator assembly, comprising the two stator parts 2, the stator holder 5, the stator overmold 6 and the stator mounting ring 7a is arranged within the housing 200 so that it can rotate freely. The magnetic sensor 4 and its corresponding wiring are preferably arranged in a circuit board 9, e.g. a printed circuit board. The circuit board 9 preferably comprises further sensor components for measuring the angle of the stator assembly, preferably via magnetic and/or optical measurement of rotation of at least one, preferably two second gears 8b, which are held within the TAS housing 200 and are operably engaged with the first gear 8a of the stator assembly so that the rotation of the first gear 8a causes the rotation of the one or more second gears 8b.

Using the torque sensing unit 100 according to the invention, i.e. the arrangement of the flux conductors 3 axially above and below the stator parts 2, and the stator parts 2 having smaller radial dimensions than the prior art solution where radially extending edge elements are used, the total radial size of the TAS according to the invention is reduced. This is advantageous in most application where a TAS is to be built into an apparatus, e.g. onto steering columns of vehicles, simply because the TAS takes up less space and either leaves more useful space to other components or makes the installation easier. At the same time, the size of the packaging of the TAS may also be reduced, i.e. it fits into smaller standard boxes, resulting in more cost-effective storage and transportation.

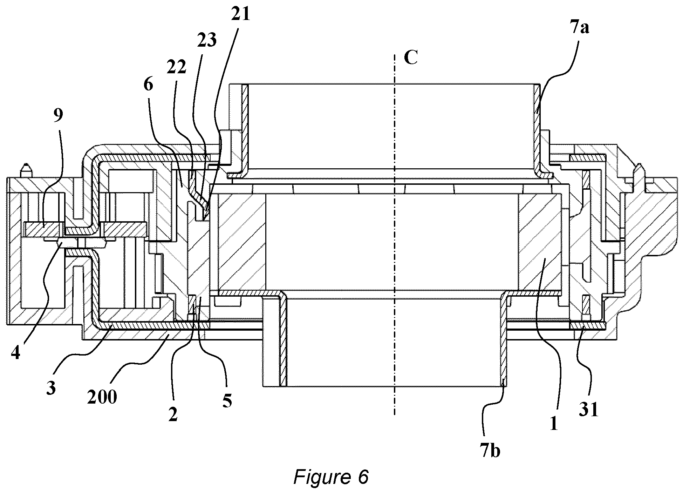

Figure 6 is a sectional view of the same preferred exemplary embodiment of the TAS according to the invention as shown in Figure 5, in a completely assembled state. A magnet mounting ring 7b is also shown for securing the permanent magnet 1 to a second one of the parts susceptible to torque, e.g. to a second steering column part in a fixed manner. Securing the permanent magnet 1 and/or the stator assembly to their respective parts does not necessarily involve mounting rings, any other fixing solution known to a person skilled in the art may also be used, e.g. binding by adhesives, securing by screw threads, form fitting and snap fitting.

## Claims

1. A torque sensor unit (100) having a central axis (C) defining an axial direction, the torque sensor unit (100) comprising:
two stator parts (2) that are spaced apart along the central axis, each stator part comprising a plurality of teeth (21) and at least one edge element (22) concentrically arranged with respect to said central axis;
two flux conductors (3), each having a plate-shaped flux receiving part (31) extending in a direction forming an angle of at least 45° with the central axis (C) for receiving the magnetic flux from the respective stator part (2) and each being disposed in alignment with the at least one edge element (22) of the respective stator part (2), wherein the flux receiving parts (31) have a flux receiving region (33) being a region of the flux receiving parts (31) that is in the closest proximity of the edge element (22);
at least one magnetic sensor (4);
at least one permanent magnet (1);
wherein the stator parts (2) are configured to conduct magnetic flux from said at least one permanent magnet (1) to the flux conductors (3) and the flux conductors (3) are configured to conduct magnetic flux to said at least one magnetic sensor (4),
**characterized in that**
said at least one edge element (22) of the stator parts (2) extends in the axial direction;
at least a portion of the flux receiving part (31) of a flux conductor (3) extends over said at least one edge element (22) of the respective stator part (2) with a gap therebetween, and
wherein the area of the flux receiving part (31) of the flux conductor (3) is defined between an inner radius and an outer radius measured from the central axis (C) in radial direction, wherein the inner radius is smaller than the distance of the edge element (22) from said central axis (C) and the outer radius is greater than the distance of the edge element (22) from the central axis (C).

2. A torque sensor unit (100) according to Claim 1, **characterized in that** the flux receiving parts (31) extend in a direction forming an angle of at least 70° with the central axis (C).

3. A torque sensor unit (100) according to Claim 1 or Claim 2, **characterized in that** the flux receiving parts (31) extend in a direction forming an angle of 90° with the central axis (C).

4. A torque sensor unit (100) according to any of the previous claims, **characterized in that** the at least one edge element (22) of the stator parts (2) is formed as a single ring linking the teeth (21) together.

5. A torque sensor unit (100) according to any of the previous claims, **characterized in that** the at least one edge element (22) of the stator parts (2) is formed as a plurality of edge members, each edge member being associated with a respective tooth (21) of the stator part.

6. A torque sensor unit (100) according to any of the previous claims, **characterized in that** the flux conductor (3) is formed as a ring or a segment of a ring.

7. A torque sensor unit (100) according to any of the previous claims, **characterized in that** the teeth (21) are connected to the at least one edge element (22) via connecting portions (23) that are inclined relative to the central axis (C).

8. A torque sensor unit (100) according to any of the previous claims, **characterized in that** the teeth (21) and the at least one edge element (22) are formed as a single integral piece.

9. A torque sensor unit (100) according to any of the previous claims, **characterized in that** the shape of the flux receiving part (31) provides an invariance of an area of the geometric axial projection of the edge element (22) on the flux receiving part (31) to a radial movement of the edge element (22) by a radial tolerance.

10. A torque sensor unit (100) according to any of the previous claims, **characterized in that** the radial tolerance is 0.1 mm to 1 mm, preferably 0.2 mm to 0.5 mm, more preferably 0.33 mm.

11. A torque and angle sensor, comprising
- a housing (200);
- a torque sensor unit; and
- an angle sensor unit, comprising a first gear (8a) fixed to the torque sensor unit, at least one second gear (8b), at least one sensor for sensing the rotation of the at least one second gear (8b), wherein the first gear (8a) and the at least one second gear (8b) has corresponding teeth in operational engagement with each other,
**characterized in that**
the torque sensor unit is a torque sensor unit (100) according to any one of Claims 1-10.

12. A torque and angle sensor according to Claim 11, **characterized in that** the first gear (8a) of the angle sensor unit is formed on an outer surface of a cylindrical stator overmold (6) holding the stator parts (2) of the torque sensor unit (100).
